# EUROPEAN PATENT APPLICATION

(11) **EP 4 129 437 A1**
(43) Date of publication of application: **08.02.2023**
(21) Application number: 21190054.3
(22) Date of filing: 06.08.2021
(51) Int. Cl.: B01D 21/00, B65D 88/00, B65D 88/02, B65D 90/04, C02F 3/12

(54) **CONTAINMENT BASIN AND METHOD FOR PROVIDING A CONTAINMENT BASIN**

(71) Applicant: Shell Internationale Research Maatschappij B.V., 2596 HR The Hague (NL)
(72) Inventor: POLVI, Steve, Calgary, Alberta T2P 0J4 (CA); ROGER, Brad, Calgary, Alberta T2P 0J4 (CA)
(74) Representative: Shell Legal Services IP

(57) **Abstract**

A containment basin comprising at least two pairs of opposite sidewalls and a bottom surface, wherein the sidewalls and bottom surface define a storage volume; and four or more intermodal containers (ICs), each IC comprising a floor extending between two ends of each IC. The floor comprises a plurality of crossbeams. Each sidewall of the containment basin comprises the floor of at least one intermodal container, and a panel fastened to an exterior of said floor. When the containment basin is in use, the panel transfer at least a portion of force exerted by material in the storage volume to one or more crossbeams. The containment basin further comprises a plurality of tension members. The first end of the tension member is connected to one sidewall of the containment basin and a second end is connected to the opposite sidewall.

## Description

### FIELD OF THE INVENTION

This invention relates to a large-scale containment basin for solids and/or liquids comprising a plurality of intermodal containers (ICs) placed vertically on one of their end walls and to methods for making such basins.

### BACKGROUND OF THE INVENTION

Large-scale containment basins for storage and processing of fluids such as solids and/or fluids are useful in various applications. Examples may include firewater storage, pumped storage, freshwater storage, drilling and completions fluid storage, holding feedstocks (liquids, slurries, or solids) for processing, mixing of two fluids, biomass bunkers for biofuel production, and low-pressure gas storage. Another examples includes wastewater treatment in which large-scale containment basins can be used as different types of tanks, including holding tanks for storing water before or after it is treated, equalization tanks for dampening large variations in water flow rate or quality, aeration tanks for stimulating aerobic breakdown of contaminants, membrane bioreactor (MBR) tanks for removing contaminants during or after aeration, settling tanks for removing heavier-than-water solids, filtration tanks for filtering wastewater, air/water tanks for air stripping of volatile contaminants or for cooling and evaporation. Yet other examples include constructed reservoirs for pumped storage hydropower, containment of drilling fluids in hydraulic fracturing operations, potable drinking water supply for remote locations, biological digestion of liquid or solid agricultural waste to produce biomethane.

While ponds or dugouts created by removing dirt from the ground can be used to store solids and/or fluids, they can require significant time to build and costs associated therewith, as well as being sensitive to the geotechnical qualities of the foundation. Moreover, due to the primarily underground nature of ponds or dugouts, access to the sides for placement of equipment is often a challenge.

Alternatively, aboveground structures can be used such as a concrete containment structure using poured concrete as floors and walls. These, however, are sensitive to the chemical composition of the contents and can degrade without special coatings.

Another aboveground structure is also disclosed by US 10046905, which provides for a water treatment tank is constructed from several adjoining intermodal containers (ICs) in which each IC has a reinforced sidewall defining a tank wall and a bracing structure is attached to ICs end walls at each junction between adjoining ICs.

Yet another example is US6977038 in which the interior of an individual sea-freight shipping container is lined with a watertight shell or liner to serve as a septic tank. The volume of such tanks is limited to the size of the individual shipping container.

As such, there is still a need for large-scale containment basins that do not require significant build time and costs and have different configuration options, thereby allowing for a smaller area footprint with the same volume capacity without some of the challenges noted above.

### SUMMARY

Accordingly, the present disclosure provides for a containment basin comprising: (a) at least two pairs of opposite sidewalls and a bottom surface, wherein the sidewalls and bottom surface define a storage volume; (b) four or more intermodal containers (ICs), each IC comprising a floor extending between two ends of each IC, said floor comprises a plurality of crossbeams and is configured to support a load during transport; and (c) a plurality of tension members, each tension member comprising a first end and a second end, wherein the first end is connected to one sidewall of the containment basin and a second end connected to the opposite sidewall, wherein the tension members are capable of countering at least a portion of the force exerted by material in the storage volume when the containment basin is in use. Each sidewall of the containment basin comprises the floor of at least one intermodal container and a panel fastened to an exterior of said floor. When the containment basin is in use, the panel transfer at least a portion of force exerted by material in the storage volume to one or more crossbeams of said floor.

Optionally, each sidewall of the containment basin comprises the floor of two or more intermodal containers placed vertically on its end and adjacent to one another.

Optionally, a first plurality of tension members is connected to a top portion of the sidewalls of the and a second plurality of tension members are connected to a bottom portion of the sidewalls.

In yet another option, the floors of two or more ICs arranged horizontally adjacent to one another form at least one sidewall of the containment basin, wherein one end of at least one tension member is connected to both adjacent ICs. Optionally, the adjacent ICs are placed so that the corners of a sidewall of one IC are horizontally adjacent to and aligned with the corners of a sidewall of other IC and wherein the one end of at least one tension member is connected to adjacent corners of the adjacent ICs.

Suitably, the plurality (preferably greater than 50%, more preferably greater than 90%, and most preferably all) of tension members can comprise or consist essentially of sucker rods.

Optionally, at least a portion and up to all of the ICs have an opening, which is positioned upwards (away from the bottom surface) and that portion further comprises external structural support to oppose one or more forces that tend to distort the shape of such opening. Optionally, the containment basin further comprises a liner covering at least a portion of the bottom surface and sidewalls. Optionally, the containment basin further comprises a roof covering a least a portion of the storage volume.

In another aspect, the present disclosure describes a method for providing a containment basin comprising (a) arranging a plurality of intermodal container (ICs) vertically on a bottom surface to form at least two pairs of opposite sidewalls to define a storage volume, wherein the storage volume comprises a bottom portion of each of the ICs; (b) fastening a panel to an exterior of said floor to form a surface of the storage volume; (c) providing a plurality of tension members, each tension member comprising a first end and a second end; and (d) connecting one end of each tension member to one sidewall of each of the at least two pairs of opposite sidewalls and connecting the second end of the tension members to the opposite sidewall of the pair, wherein at least a portion of the tension members provides an inward force to counter one or more outward forces experienced by at least one IC from the content in the storage volume. When the containment basin is in use, the panel transfer at least a portion of force exerted by material in the storage volume to one or more crossbeams of said floor.

### BRIEF DESCRIPTION OF THE DRAWINGS

The following figures are included to illustrate certain aspects of the present disclosure and should not be viewed as exclusive embodiments. The subject matter disclosed is capable of considerable modifications, alterations, combinations, and equivalents in form and function, as will occur to one having ordinary skill in the art and the benefit of this disclosure.
FIG. 1A is a perspective view of an ISO standard compliant intermodal container (IC) placed horizontally on its floor.
FIG. 1B is a perspective view looking up at the exterior of the floor of the IC of FIG. 1A.
FIG. 1C is a perspective view of a cutout of the top of the floor of the IC of FIG. 1A.
FIG. 2A is a perspective view of an embodiment of the containment basin according to aspects disclosed in the present disclosure.
FIG. 2B is a top view of the containment basin of FIG. 2A.
FIG. 2C is a side view of the containment basin of FIGS. 2A and 2B.
FIG. 3A is a perspective view of another embodiment of the containment basin according to aspects disclosed in the present disclosure.
FIG. 3B is a top view of the containment basin of FIG. 3A.
FIG. 3C is a side view of the containment basin of FIGS. 3A and 3B.
FIG. 4 is a perspective view of a corner of the containment basin of FIG. 1.
FIG. 5A is a side view of an embodiment of an end of a tension member connected to two corners of adjacent ICs of the containment basin according to aspects disclosed in the present disclosure.
FIG. 5B is a side view of an embodiment of an end of a tension member connected to one corner of one IC of the containment basin according to aspects disclosed in the present disclosure.
FIG. 6 is a perspective view of an embodiment of a sidewall of the containment basin according to aspects disclosed in the present disclosure.
FIG. 7 is a perspective view of one exemplary sidewall of an embodiment of the containment basin according to aspects disclosed in the present disclosure.

### DETAILED DESCRIPTION

The present disclosure generally provides systems and methods for producing steam for use in enhanced oil recovery processes, including systems and methods comprising an electrode boiler and one or more heat exchangers for steam production. Specific details of various embodiments of the disclosed steam production systems and methods are described below in detail as illustrated in the accompanying drawings. References to "one embodiment," "an embodiment," "an example embodiment," etc., indicate that the embodiment described may include a particular feature, structure, or characteristic, as an option but every embodiment may not necessarily but can include the particular feature, structure, or characteristic. Moreover, such phrases are not necessarily referring to the same embodiment. In some instances, well known process steps and/or structures may have not been described in detail in order to not unnecessarily obscure the present invention. The depiction of some of such features in the figures does not indicate that all of them are depicted. In addition, when like elements are used in one or more figures, identical reference characters will be used in each figure, and a detailed description of the element will be provided only at its first occurrence.

Described herein is a containment basin comprising a storage volume defined by at least two pairs of opposite sidewalls and a bottom surface. The containment basin further comprises a plurality of intermodal containers (ICs), each IC comprising a floor spanning between two end walls. The floor is configured to support a load during transport, and each sidewall of the containment basin comprises the floor of at least one intermodal container (IC) placed vertically on one of its end walls. The containment basin further comprises a plurality of tension members. Each tension member comprises a first end connected to one sidewall of each of the at least two pairs of opposite sidewalls and a second end connected to the opposite sidewall of the pair. At least a portion or all of the tension members provides an inward force to counter one or more outward forces experienced by at least one IC from the content in the storage volume.

As will be further described below, aspects of the containment basins and the methods for making such basins as described herein allow for rapid construction and deployment of containment basins that can have storage capacity of at least 50 m³, preferably at least 100 m³, and more preferably 150 m³.

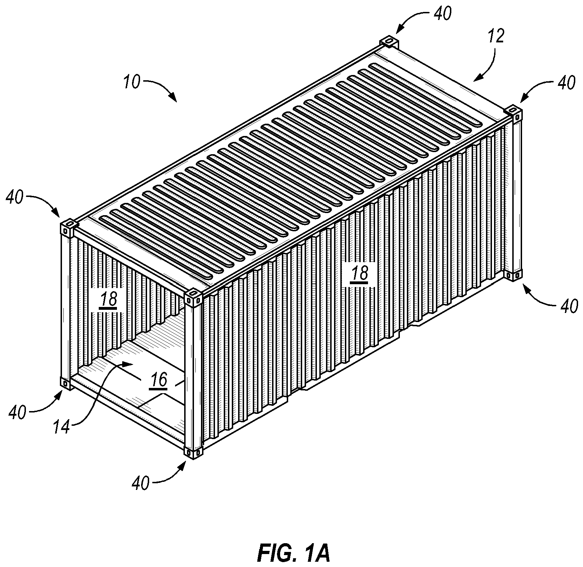

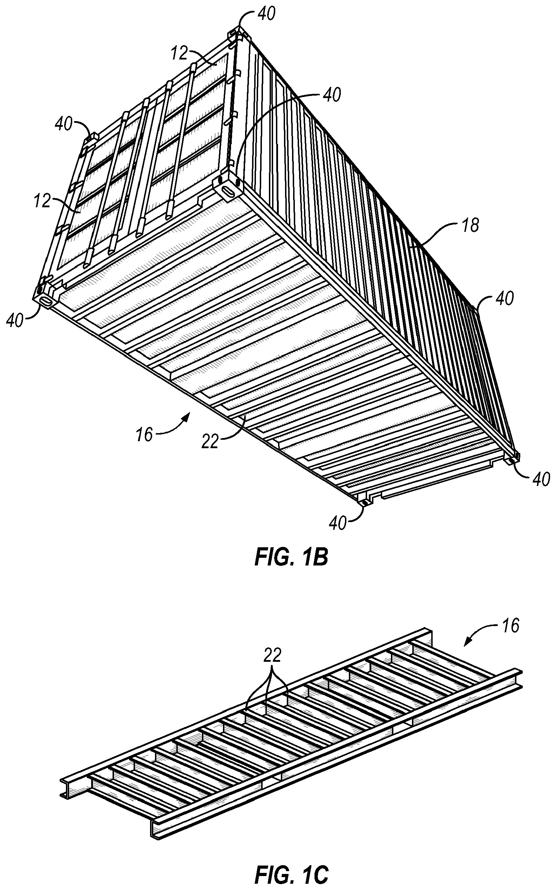

FIGS. 1A and 1B show different views of a typical intermodal container 10, which is also called a shipping container, a freight container, an ISO container, hi-cube container, box, conex box and sea can. Intermodal container **10** is has standardized dimensions for storing and transporting materials and products using the intermodal freight transport system, meaning the standard dimensions as well as a number of key structural features allows the containers (and therefore their cargo) to be moved across different modes of transport - from ship to rail to truck while being able to withstand the stresses of intermodal shipping. Intermodal containers exist in many types and a number of standardized sizes pursuant to standard ISO 6346. While the length of an IC may vary from 8 feet (2.438 m) to 56 feet (17.07 m) in compliance with ISO 6346, most ICs have dimensions of 8 feet (2.4 m) wide (e.g., width of end wall **12** and opening **14** opposite of end wall **14** which would accommodate removable doors as shown in FIG. 1B) and of either 20 or 40 feet (6.1 or 12.2 m) in length (e.g., length of floor **16** and of sidewalls **18).** The common heights are 8 feet 6 inches (2.6 m) and 9 feet 6 inches (2.9 m) (e.g., as height of sidewalls **18** extending from floor **16** to the top). As shown, floor **16** extends between two ends (end wall **12** and opening **14)** of IC **10,** and floor **16** is configured to support a load during transport. As can be seen in FIGS. 1B and 1C, floor **16** comprises a plurality of steel crossbeams **22** spanning across the width of floor **16.** In particular, FIG. 1C shows crossbeams **22** seen from an interior view of IC **10** looking straight down at floor **16** while FIG. 1B shows crossbeams **22** seen from an exterior view looking up at floor **16.** Without being bound by theory, the inventors have found that crossbeams **22** of floor **16** is well suited for use as a containment wall because it provides higher strength resistance against the force exerted by the stored material (such as hydrostatic force) than sidewalls **18.**

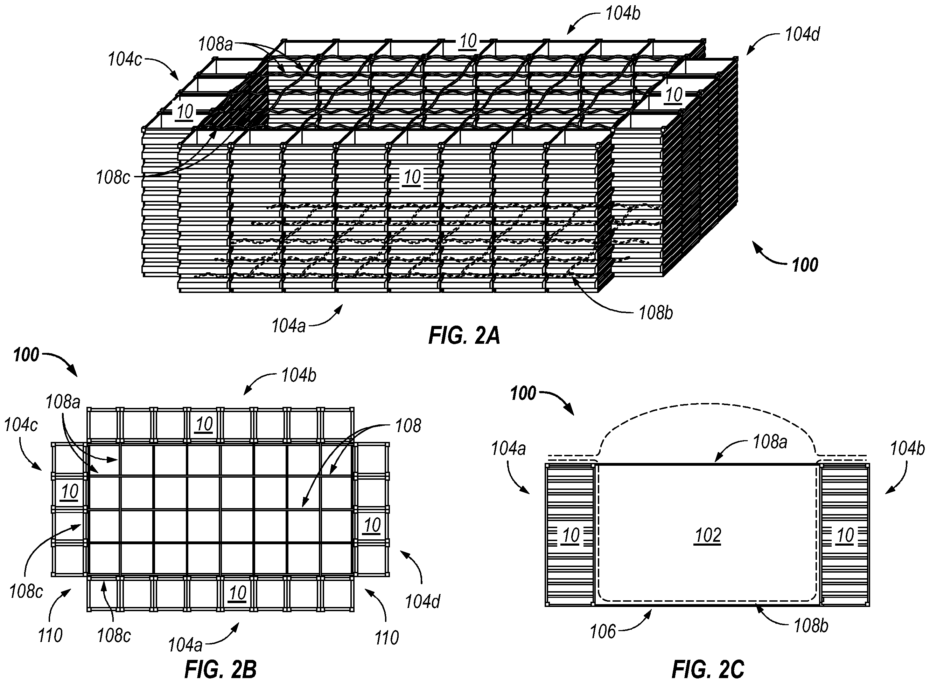

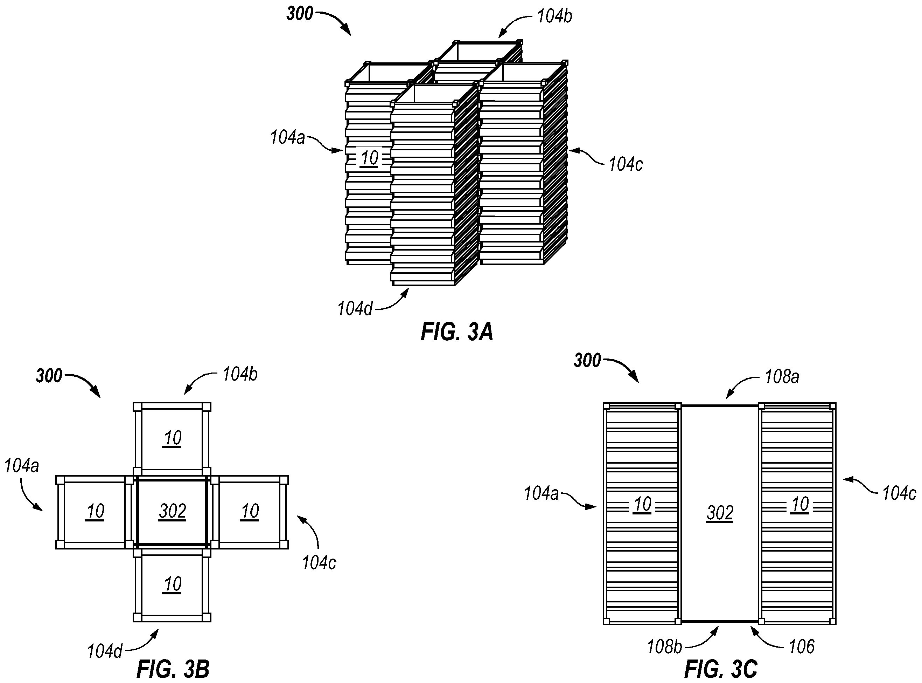

FIGS. 2A - 2C show various perspectives of a containment basin, basin **100,** according to aspects described herein. In particular, FIG. 2A shows a perspective view, FIG. 2B shows a top view, and FIG. 2C shows a cross-sectional side view. As shown, containment basin **100** comprises at least two pairs of opposite sidewalls, first pair **104a** - **104b** and second pair **104c** - **104d,** and bottom surface **106.** The sidewalls **104a** - **104d** and bottom surface **106** define storage volume **102.** Floor **16** of at least one IC **10** placed vertically on one of its ends (either end wall **12** or opening **14)** forms each of the sidewalls **104a** - **104** of containment basin **100.** That is, referring to FIG. 3, each of sidewalls **104a** - **104d** can comprise floor **16** of one IC **10** to form a square containment basin **300.** Preferably, referring to FIGS. 2A - 2C, each of sidewalls **104a** - **104d** can comprise floor **16** of a plurality of ICs **10** to form containment basin **100,** which has a larger storage volume **102** than the storage volume **302** of basin 300 of FIG. 3. Preferably, the ICs of a particular basin (e.g., **100** or **300)** have the same length.

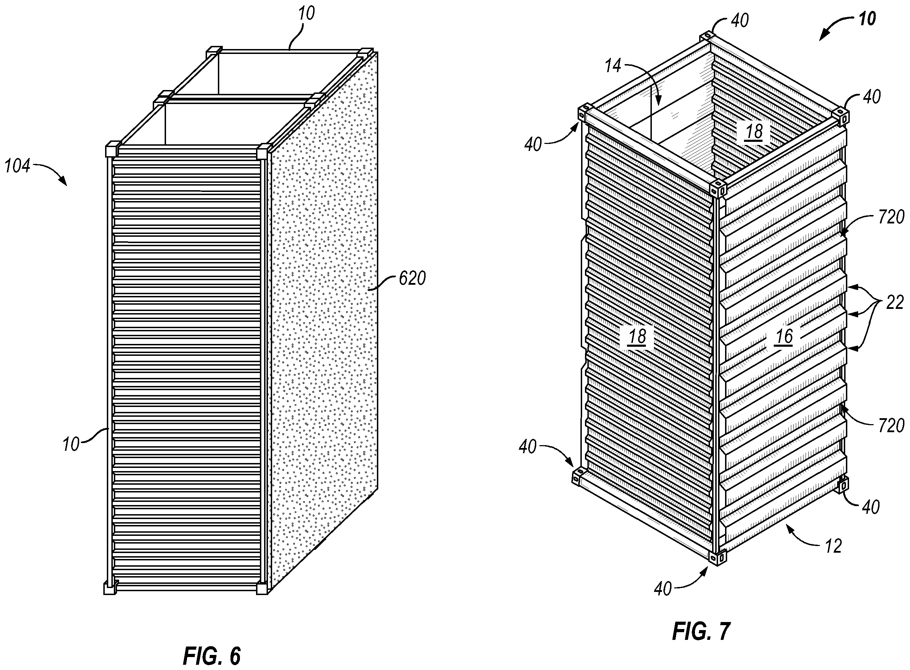

Referring to FIG. 6, embodiments as disclosed further comprise panel **620** fastened to an exterior surface of floor **16** of each IC **10.** Exemplary suitable fastening mechanisms include but not limited to one or more bolts, screws, nuts, pins, stitches, staples, brads, rivets, adhesives, straps, attaching by tack welding, bracing, strapping, welding, or using a fitting, or a combination thereof. When the containment basin as disclosed herein is in use, the material in the containment basin pushes outward against sidewalls **104a- 104d.** Panel **620** transfers at least a portion or all of such outward force exerted by material in the storage volume (such as **102** or **302)** to one or more crossbeams of floor **16.** A panel **620** for a particular sidewall preferably covers at least the surface area of that sidewall. For instance, referring to FIG. 6, if sidewall **104a** has two ICs, panel **620** covers at least the surface area of that sidewall **104a**. While FIG. 6 depicts panel **620** as a single piece, it is understood that panel **620** can comprise a plurality of pieces fastened together and/or placed adjacent to one another (such as sheet piles or plywood) to form panel **620** to spread the outward force from the stored material to floor **16.** Preferably, each sidewall **104** has a panel **620** fastened thereto to form the interior sidewall surface area of the storage volume (such as **102** or **302).** For embodiments that employ a liner as further described below, panels **620** are suitably arranged to minimize the existence of gaps in which the liner and corresponding material can be trapped, which can exert extra pressure on the liner and potentially leading to tearing in the liner. Panel **620** can be made of any suitable material that can spread the exerted force to the crossbeams of floor **16.** Exemplary materials include plywood, lumber, timbers, formed or unformed metal sheet or plate, such as sheet piles, plastics or polymers, and any combination thereof.

FIG. 7 illustrates one IC **10** placed on one of its ends with the exterior of floor **16** forming an interior surface of a sidewall of one embodiment of a containment system as described herein. In particular, FIG. 7 shows an option of using a plurality of sheet piles fastened to floor **16,** preferably to the crossbeams and arranged adjacent to one another to form panel **720.** It is understood that the sheet piles can be fastened to floor **16** so that the edges overlap and/or placed next to each other as desire.

Referring to FIGS. 2A - 2C, basin **100** further comprises a plurality of tension members **108.** Each tension member **108** comprises a first end and a second end, where the first end is connected to one sidewall (such as **104a** or **104c)** and the second end is connected to the opposite sidewall **(104b** or **104d**, respectively). At least a portion or all of tension members **108** provide an inward force to counter one or more outward forces exerted on at least one sidewall by the content of the storage volume.

While the ends of tension members **108** can be connected to ICs **10** of sidewalls **104a-104d** as described above at any suitable locations, it is preferred that containment basin **100** comprises a first plurality of tension members **108a** that is connected to a top portion of sidewalls **104a - 104d** and a second plurality of tension members **108b** that is connected to a bottom portion of sidewalls **104a** - **104d** as shown in FIGS. 2A - 2C and 3. That is, tension members 108 help to maintain the shape of basins **100** and **300** when the basin is in use and contains content (solids or fluids) in storage container **102.** The content exerts an outward force against the sidewalls, which tends to push the sidewalls, and correspondingly the ICs, apart. The weight of the ICs themselves can counter some of such outward force in addition to the inward force provided by the tension members connected to opposite sidewalls. The optional embodiment with a first plurality of tension members **108a** connected to a top portion of sidewalls **104a** - **104d** and a second plurality of tension members **108b** connected to a bottom portion of sidewalls **104a** - **104d** provides a suitable configuration for additionally counteracting the outward forces that may be experienced by basin **100.** It is understood by one of ordinary skill that embodiments of the containment basins described herein can comprise any suitable configuration of tension members beyond what is explicitly described here to counter the outward force experienced by the sidewalls when the basin is in use.

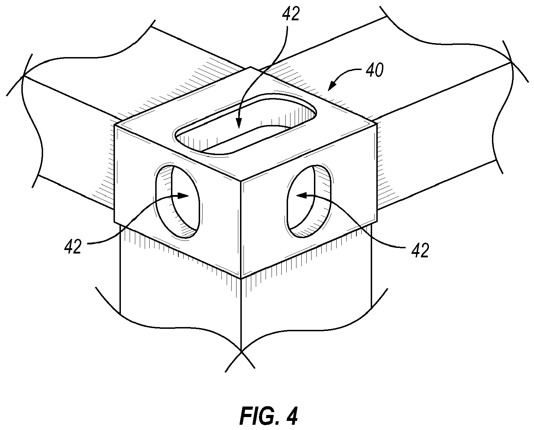

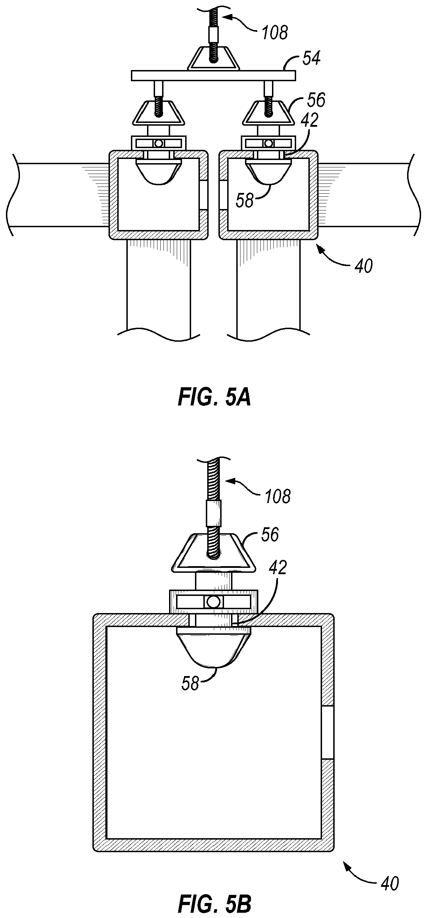

For embodiments in which at least one sidewall (such as **104a, 104b, 104c,** or **104d)** comprises a plurality of floors **16,** such as basin **100** of FIGS. 2A - 2C, the plurality of ICs **10** forming one sidewall are arranged horizontally adjacent to one another and each placed vertically on one of its ends. Optionally, one end of at least one tension member **108** is connected to both adjacent ICs **10.** Floors **16** of adjacent ICs **10** preferably have similar length but not necessarily width to provide the formed basin with sidewalls that have relatively uniform height. The adjacent ICs are preferably arranged so the corners of sidewall 18 of one IC is aligned with the corners of sidewall 18 of the adjacent IC. The configuration of connector boxes at corners of ICs **10** are also standardized to facilitate stacking during transport. Connector boxes are where loads are applied during at least loading and unloading of ICs **10,** thereby making them suitable locations for fastening of tension corners to ICs **10.** FIG. 4 depicts one such exemplary connector box **40** at applicable corners of ICs **10,** which comprises a number of elongated oval holes **42** that can accommodate a standard vertical stacking connector configured to fasten various items to connector box **40.** Such connectors generally comply with international standard ISO 1161 and are well known in the art. Standard vertical stacking connectors are one suitable way to connect tension members **108** to ICs **10.** FIGS. 5A and 5B illustrate one exemplary end of tension member **108** fastened to connector **56,** which comprises anchor part **58** retained by hole **42** to connect tension member **108** to connector box **40.** Anchor part **58** has a corresponding shape to oval hole **42** to allow it to be inserted through hole **42** when parallel to the long aspect of oval hole **42.** Once inserted, to fasten connector **56** to connector box **40,** connector **56** is turned while inside hole **42** so that anchor part **58** is perpendicular to the long aspect of oval hole **42** to lock anchor part **58** in connector box **40.**

The ends of tension members **108** can be fastened to connector **56** using methods or components known in the art so that members **108** and connector **56** are attached to one another. Exemplary suitable fastening mechanisms include but not limited to one or more bolts, screws, nuts, pins, stitches, staples, brads, rivets, adhesives, straps, attaching by tack welding, bracing, strapping, welding, or using a fitting, or a combination thereof.

In particular, as shown in FIG. 5A, the end of one tension member **108** can be fastened to one anchor part **58,** which can be used for tension members **108c.** Additionally or alternatively, as shown in FIG. 5B, the end of one tension member **108** can be fastened to two adjacent anchor members **58** via plate **54,** each of the adjacent anchor members **58** can be inserted and locked in connector boxes **40** of adjacent corners of adjacent ICs **10.**

Connecting the ends of a plurality of tension members 108 to both adjacent ICs via their corners help to connect adjacent ICs together and mitigate relative movements between adjacent ICs when force is exerted against a sidewall of the basin. As can be seen in FIGS. 2A - 2C and 3, the ends of tension members 108 can but need not be connected to horizontally adjacent ICs. For example, basin 100 in FIGS. 2A - 2C, the ends of tension members **108c** that run along sidewalls **104a** - **104d** are connected to one IC. Similarly, the ends of tension members **108** of basin **300** in FIG. 3 are connected to one IC at a time because each sidewall comprises one IC. The mechanism through which a tension member is connected to an IC and the number of ICs to which a tension member is connected are both within the knowledge of one skilled in the art to configure and design pursuant to certain desired specifications.

Suitably, at least a portion (preferably greater than 50%, more preferably greater than 90%, and most preferably all) of tension members **108** preferably comprise, and more preferably consist essentially, of sucker rods. A sucker rod is a steel rod, typically between 25 and 40 feet (7 to 9 meters), including 37.5 ft, in length and diameters of 3/4, 7/8, 1, and 1 1/4 inch, and threaded at both ends, used in the oil industry to join together the surface and downhole components of a reciprocating piston pump installed in an oil well. It is understood that tension members **108** can comprise any suitable material including pipe, re-bar, cable, I-beams, structural steel, wooden beams, etc. If sucker rods are selected as tension members **108,** the sucker rods preferably have metallic threaded ends, female at one end and male at the other. As described above with respect to FIGS. 5A and 5B, the ends of the sucker rods, as well as other suitable materials, can be modified to connect to ICs **10,** particularly using connector boxes **40** at the respective corners of IC **10.** Optionally, threaded turnbuckles known to one of ordinary skill connected to the sidewalls of the containment basin can allow further adjustment of the tension of tension members **108** connected to the sidewalls of the basin by adjusting the length of individual tension members. Other suitable tension members include those that comprise a first end and a second end to allow the member to be connected to the sidewalls of the basin and are capable of countering at least a portion (preferably greater than 50%, more preferably greater than 90%, and most preferably all) of the force exerted by material in the storage volume when the containment basin is in use.

As described, referring to FIGS. 2A - 2C, embodiments of the containment basins as described herein can have adequate strength through use of floor **16** and an attached panel (e.g., panel **620** and/or **720)** as sidewalls **104a** - **104d** defining storage volume **102** such that reinforcement (such as those described in US10046905) of a sidewall **18** of IC **10** for use as a sidewall of the basin is not needed. Referring to FIG. 2B, embodiments of the containment basins as described herein can have adequate support through use of a plurality of tension members such that additional structural support external to the ICs between an angle (angle **110)** formed by interconnected sidewalls (e.g., **104a** and **104c** or **104d),** such as those described in US10046905, are not needed. That is, optionally, one embodiment of the containment basin does not comprise any structural support external to the ICs in between at least one angle **110** formed by interconnected sidewalls **104a** and **104c** or between all angles **110** formed by the interconnected sidewalls of basin **100.**

The storage volume of the containment basins as described herein can be lined with a waterproof liner for holding a liquid, slurry, and/or solid. Suitable waterproof liners are well known in the art. If desired, the containment basin may be covered by a roof or left open. If covered, it may be ventilated or sealed as the specification or purpose dictates. Furthermore, an optional insulation layer may be installed between the liner and the sidewalls of the containment basin. Optionally, the containment basin can further comprise a secondary support component such as a concrete liner poured and set against one or more sidewalls of the containment basin (i.e., set against panel 620) to form a surface of the storage volume. The optional liner, if used, would be laid on top of the concrete liner or plasticized material can be sprayed on the concrete. Additionally or alternatively, plastic or fiberglass sheets attached to one another can be used as a liner.

Optionally, the sidewalls of certain embodiments of the containment basin can further include ports for mounting pipes, electrical and communication cables, sensors, monitors, probes, etc., for various applications, including monitoring of the condition of water in the basin and treating the water to change that condition. Interface components for the inputs and outputs of the containment basins include any of air lines, power cable, communications cable, piping, viewing access, sampling access, vent access, solid effluent extractor, and manual access. Visual monitors, electronic sensors, and drives from motors or other power sources may be mounted on the sidewalls of the containment basin.

It is understood by one of ordinary skill that other configurations of containment basins as described herein are possible. While the preferred shape for a containment basin according to aspects of this disclosure is rectilinear, sidewalls of the basin can be positioned to define a storage volume with angles between the interconnected sidewalls (e.g., angles **110)** of less than a right angle. Containment basins can form hexagonal or octagonal shapes or as the number of sidewalls increase, the overall shape can approach a circular shape. While not shown, certain embodiments of the containment basin described herein can include sidewalls comprising a second level of intermodal containers **10** stacked vertically, particularly with one end (e.g., **12** or **14)** of one IC **10** placed on top of one end of a second IC **10** around the sidewalls of the containment basin. Bolts that fit into connector box **40** shown in FIGS. 5A and 5B known to those of ordinary skill can be used to fasten the vertically stacked ICs **10 in** addition to use of tension members. Panel **320** for such double height embodiments suitably has dimensions to substantially cover the sidewall surface area. These double height containment basin embodiments can be particularly suitable to store low density materials such as wood chips and a gaseous material. For gaseous material, a gas-tight liner can be used.

The permitted variations in length and height of conventional ISO standard-compliant ICs allow for a corresponding variation in tank sidewall length and tank height that can be implemented with the illustrated arrangement. In addition, while not preferred and not shown, embodiments of the containment basin described herein can include ICs **10** that are placed horizontally on one of the sidewalls **18** so that floor **16** forms a sidewall of the containment basin described herein.

Accordingly, referring to the figures, the present disclosure also provides a method for constructing a containment basin, such as basin **100** or **300.** The method comprises: arranging a plurality of intermodal container (ICs) **10** vertically on a bottom surface **(12** or **14)** to form at least two pairs of opposite sidewalls **104** to define a storage volume **(102** or **302).** The storage volume comprises floor 16 of each of the ICs and fastening panel **620** to an exterior of floor 16 to form a surface of the storage volume **(102** or **302).** When the containment basin is in use, panel **620** transfers at least a portion (preferably greater than 50%, more preferably greater than 90%, and most preferably all) of the force exerted by material in the storage volume to one or more crossbeams of said floor. The method further comprises providing a plurality of tension members **108,** each tension member comprising a first end and a second end and connecting one end of each tension member **108** to one sidewall **(104a, b, c,** or **d)** of each of the at least two pairs of opposite sidewalls and connecting the second end of tension members **108** to the opposite sidewall of the pair. At least a portion (preferably greater than 50%, more preferably greater than 90%, and most preferably all) of the tension members **108** provides an inward force to counter one or more outward forces experienced by at least one or all IC **10** from the content in the storage volume **(102** or **302).** As noted above, a detailed description of the elements in the figures are already provided above and are not repeated here for ease of reading.

As described, the present disclosure provides basins and methods of constructing such basins that meet certain challenges noted above.

## Claims

1. A containment basin comprising:
a. at least two pairs of opposite sidewalls and a bottom surface, wherein the sidewalls and bottom surface define a storage volume;
b. four or more intermodal containers (ICs), each IC comprising a floor extending between two ends of each IC, said floor comprises a plurality of crossbeams and is configured to support a load during transport,
wherein each sidewall of the containment basin comprises:
i. the floor of at least one intermodal container; and
ii. a panel fastened to an exterior of said floor;
wherein when the containment basin is in use, the panel transfer at least a portion of force exerted by material in the storage volume to one or more crossbeams of said floor; and
c. a plurality of tension members, each tension member comprising a first end and a second end, wherein the first end is connected to one sidewall of the containment basin and a second end connected to the opposite sidewall,
wherein the tension members are capable of countering at least a portion of the force exerted by material in the storage volume when the containment basin is in use.

2. The containment basin of claim 1, wherein each sidewall of the containment basin comprises the floor of two or more intermodal containers placed vertically on its end and adjacent to one another.

3. The containment basin of any preceding claims, wherein a first plurality of tension members is connected to a top portion of the sidewalls of the and a second plurality of tension members are connected to a bottom portion of the sidewalls.

4. The containment basin of any preceding claims, wherein the floors of two or more ICs arranged horizontally adjacent to one another form at least one sidewall of the containment basin, wherein one end of at least one tension member is connected to both adjacent ICs.

5. The containment basin of claim 4, wherein the adjacent ICs are placed so that the corners of a sidewall of one IC are horizontally adjacent to and aligned with the corners of a sidewall of other IC and wherein the one end of at least one tension member is connected to adjacent corners of the adjacent ICs.

6. The containment basin of any preceding claims, wherein the plurality of tension members comprises a plurality of sucker rods.

7. The containment basin of any preceding claim further comprising a liner covering at least a portion of the bottom surface and sidewalls.

8. The containment basin of any preceding claims, further comprising a roof covering a least a portion of the storage volume.

9. A method for providing a containment basin comprising:
a. arranging a plurality of intermodal container (ICs) vertically on a bottom surface to form at least two pairs of opposite sidewalls to define a storage volume, wherein the storage volume comprises a bottom portion of each of the ICs;
b. fastening a panel to an exterior of said floor to form a surface of the storage volume;
wherein when the containment basin is in use, the panel transfer at least a portion of force exerted by material in the storage volume to one or more crossbeams of said floor;
c. providing a plurality of tension members, each tension member comprising a first end and a second end; and
d. connecting one end of each tension member to one sidewall of each of the at least two pairs of opposite sidewalls and connecting the second end of the tension members to the opposite sidewall of the pair, wherein at least a portion of the tension members provides an inward force to counter one or more outward forces experienced by at least one IC from the content in the storage volume.

10. The method of claim 9, wherein each sidewall of the containment basin comprises the floor of two or more intermodal containers placed vertically on its end and adjacent to one another.

11. The method of any one of claims 9 - 10, wherein a first plurality of tension members is connected to a top portion of the sidewalls of the and a second plurality of tension members are connected to a bottom portion of the sidewalls.

12. The method of any one of claims 9 - 11, wherein the floors of two or more ICs arranged horizontally adjacent to one another form at least one sidewall of the containment basin, wherein one end of at least one tension member is connected to both adjacent ICs.

13. The method of any one of claims 9 - 12, wherein the adjacent ICs are placed so that the corners of a sidewall of one IC are horizontally adjacent to and aligned with the corners of a sidewall of other IC and wherein the one end of at least one tension member is connected to adjacent corners of the adjacent ICs.

14. The method of any one of claims 9 - 13, wherein the plurality of tension members comprises a plurality of sucker rods.
